# EUROPÄISCHE PATENTANMELDUNG

(11) **EP 4 818 750 A1**
(43) Veröffentlichungstag der Anmeldung: **07.10.2026**
(21) Anmeldenummer: 25167334.9
(22) Anmeldetag: 31.03.2025
(51) Int. Cl.: G01S 7/539, G01S 7/53, G01S 15/931

(54) **VERFAHREN UND SYSTEM ZUR ERKENNUNG EINES HINDERNISSES MIT HILFE VON REFLEKTIERTEN ULTRASCHALLWELLEN**

(71) Anmelder: Elmos Semiconductor SE, 51379 Leverkusen (DE)
(72) Erfinder: Prümer, Erik, 59439 Holzwickede (DE); Heppekausen, Stefanie, 45239 Essen (DE)
(74) Vertreter: dompatent

(57) **Zusammenfassung**

Die Erfindung betrifft ein Verfahren zur Erkennung eines Hindernisses mit Hilfe von reflektierten Ultraschallwellen, insbesondere als Einparkhilfe für ein Fahrzeug, mit den Schritten: Aussenden eines Ultraschallsignals durch einen Ultraschallsender in einen zu überwachenden Erfassungsbereich; Empfangen eines von einem Hindernis im Erfassungsbereich reflektierten Ultraschallsignals durch einen Ultraschallempfänger als Ultraschall-Empfangssignal; Detektieren eines lokalen Maximums in einer Einhüllenden des Ultraschall-Empfangssignals durch eine Auswertevorrichtung; Bestimmen eines ersten Bereichs und eines zweiten Bereichs durch die Auswertevorrichtung, wobei der erste Bereich einen Mittelpunkt zeitlich vor dem lokalen Maximum und der zweite Bereich einen Mittelpunkt zeitlich nach dem lokalen Maximum aufweist und wobei sowohl der erste Bereich als auch der zweite Bereich das lokale Maximum zumindest teilweise mitumfasst; Bestimmen eines statistischen Maßes σ̅₁ für den ersten Bereich und eines statistischen Maßes σ̅₂ für den zweiten Bereich, und Ermitteln einer Hindernisklassifikation für das Hindernis im Erfassungsbereich anhand des bestimmten statistischen Maßes *σ̅*₁ für den ersten Bereich und des statistischen Maßes *σ̅*₂ für den zweiten Bereich.

## Beschreibung

Die Erfindung betrifft ein Verfahren zur Erkennung eines Hindernisses mit Hilfe von reflektierten Ultraschallwellen, wobei dieses Verfahren insbesondere Anwendung als Einparkhilfe für Fahrzeuge findet. Im Speziellen betrifft die Erfindung ein Verfahren zur Erkennung eines Typs von Hindernis insbesondere im Umfeld eines Fahrzeugs.

Die Erkennung eines Hindernisses im Umfeld insbesondere eines Fahrzeugs mit Hilfe der Analyse des empfangenen Echosignals von zuvor ausgesendeten Ultraschallwellen ist grundsätzlich bekannt. Derartige Verfahren haben sich bei automobilen Anwendungen als beispielsweise Einparkhilfen bewährt.

Aktuell existieren nur unzureichende Möglichkeiten, verschiedene Typen von Hindernissen mittels einer statischen Messung voneinander zu unterscheiden. Dass die Unterscheidung verschiedener Typen von Hindernissen relevant sein kann, zeigt das Beispiel eines Stoppers, d.h. einer Bodenschwelle wie sie insbesondere auf Parkplätzen eingesetzt werden, um dem einparkenden Fahrer zu signalisieren, wie weit er in die Parkbox fahren sollte (nämlich so weit, bis die vorderen oder hinteren Räder den Stopper berühren).

Verfahren zur Nutzung reflektierter Ultraschallwellen sind beispielsweise aus DE-A-100 27 828 und DE-A-198 46 241 bekannt.

Aufgabe der Erfindung ist es, ein Verfahren zur Erfassung eines Hindernisses mittels reflektierter Ultraschallwellen anzugeben, mit dessen Hilfe sich Hindernisse unterschiedlicher Höhe voneinander unterscheiden lassen.

Zur Lösung dieser Aufgabe wird mit der Erfindung ein Verfahren zur Erkennung eines Hindernisses mit Hilfe von reflektierten Ultraschallwellen, insbesondere als Einparkhilfe für Fahrzeuge, vorgeschlagen, wobei das Verfahren die folgenden Schritte aufweist:
- Aussenden eines Ultraschallsignals durch einen Ultraschallsender in einen zu überwachenden Erfassungsbereich,
- Empfangen eines von einem Hindernis im Erfassungsbereich reflektierten Ultraschallsignals durch einen Ultraschallempfänger als Ultraschall-Empfangssignal,
- Detektieren eines lokalen Maximums einer Einhüllenden des Ultraschall-Empfangssignals durch eine Auswertevorrichtung,
- Bestimmen eines ersten Bereichs und eines zweiten Bereichs durch die Auswertevorrichtung, wobei der erste Bereich einen Mittelpunkt zeitlich vor dem lokalen Maximum und der zweite Bereich einen Mittelpunkt zeitlich nach dem lokalen Maximum aufweist und wobei sowohl der erste Bereich als auch der zweite Bereich das lokale Maximum zumindest teilweise mitumfassen,
- Bestimmen eines statistischen Maßes σ̅₁ der Hüllkurve im ersten Bereich und eines statistischen Maßes σ̅₂ der Hüllkurve im zweiten Bereich, und
- Ermitteln einer Hindernisklassifikation für das Hindernis im Erfassungsbereich anhand des statistischen Maßes σ̅₁ für den ersten Bereich und des statistischen Maßes σ̅₂ für den zweiten Bereich.

Sinngemäß wird mit der Erfindung vorgeschlagen, Erkenntnisse über die akustische Abbildung von Hindernissen durch Aussenden von Ultraschallwellen und Empfangen von Reflexionen dieser Ultraschallwellen dazu auszunutzen, verschiedene Hindernisse, die sich insbesondere im Umfeld eines einparkenden Fahrzeuges befinden, voneinander unterscheiden zu können. Dies ist insoweit von Vorteil, als beispielsweise ein Stopper oder eine andere Art von Bodenwelle als Hindernis von beispielsweise einer Wand unterschieden werden sollte; denn eine Bodenwelle oder ein Bordstein lässt sich, anders als eine Wand, während eines Parkvorgangs durchaus "überfahren", was beispielsweise für ein benachbartes stehendes Fahrzeug selbstverständlich nicht gilt. Problematisch dabei ist, dass die Unterscheidung verschiedener Klassen von Hindernissen während z.B. eines Einparkvorgangs anhand des Hüllkurvensignals bzw. anhand des Zeitverlaufs des Echosignals bisher nicht bzw. nicht zuverlässig möglich ist.

Überraschenderweise hat sich gezeigt, dass eine Hindernisunterscheidung bzw. eine Hindernisklassifikation jedoch dann möglich ist, wenn die Untersuchung von verschiedenen Bereichen des Ultraschall-Empfangssignals in der Zeitdomäne erfolgt. Insbesondere haben Hindernisse mit einer unterschiedlichen Höhe unterschiedliche Reflexionscharakteristiken des Ultraschallsignals. So weisen beispielweise hohe Hindernisse die Charakteristik auf, dass das Ultraschall-Empfangssignal ein weitere Signalspitze bzw. ein weiteres lokales Maximum aufweist, die auf Grund einer Doppelreflexion am Boden entsteht, wobei durch die Doppelreflexion diese zweite Reflexion des hohen Hindernisses gedämpft und verzögert ist im Verhältnis zu der direkten Reflexion. Diese unterschiedlichen Charakteristiken erlauben eine Unterscheidung und Klassifikation der Hindernisse.

Bei dem erfindungsgemäßen Verfahren wird durch einen Ultraschallsender ein Ultraschall-Burstsendesignal in einen zu betrachtenden Erfassungsbereich ausgesendet. Aus diesem Erfassungsbereich empfängt ein Ultraschallempfänger das reflektierte Ultraschallsignal als Ultraschall-Empfangssignal, wenn sich im Erfassungsbereich ein Hindernis befindet. Anhand des Ultraschall-Empfangssignal bzw. anhand von dessen Zeitverlauf lässt sich mindestens ein lokales Maximum detektieren, das auf ein Hindernis zurückzuführen ist. Dies erfolgt beispielweise durch Vergleich der Signalgröße des Ultraschall-Empfangssignals mit einer Schwelle, die starr ist oder dynamisch nachführbar sein kann. Insbesondere kann es sich bei dem lokalen Maximum bzw. Peak der Einhüllenden um ein globales Maximum handeln. Insbesondere wird das lokale Maximum bzw. der Peak der Einhüllenden erzeugt durch die direkte Reflexion des Ultraschallsignals an dem Hindernis. Somit kann auf Grund des Zeitpunktes des lokalen Maximums bzw. des Peaks auf den Abstand zwischen dem Hindernis und dem Ultraschallempfänger geschlossen werden.

Bei dem erfindungsgemäßen Verfahren wird eine Höhenklassifikation mit Einordnung von Hindernissen in überfahrbare und nicht überfahrbare Hindernisse auf Grundlage der durch einen einzelnen Ultraschallsensor während eines einzelnen Messzyklus erfassten Ultraschall-Empfangssignal vorgenommen. Hierbei werden durch das Verfahren verschiedene physikalische Effekte quantifiziert, um aus deren Kombination eine Hindernisklassifikation abzuleiten. Hierzu werden erfindungsgemäß zwei Bereiche in der Zeitdomäne des Ultraschall-Empfangssignals analysiert. Der erste Bereich weist dabei einen Mittelpunkt auf, welcher zeitlich vor dem detektierten lokalen Maximum bzw. dem Peak der Einhüllenden des Ultraschall-Empfangssignals liegt. Der zweite Bereich weist einen Mittelpunkt auf, der zeitlich nach dem detektierten lokalen Maximum bzw. dem Peak der Einhüllenden des Ultraschall-Empfangssignals liegt. Beide Bereiche umfassen dabei zumindest teilweise auch das detektierte lokale Maximum der Einhüllenden des Ultraschall-Empfangssignals selbst und überlappen dabei. Dabei bezeichnet der Mittelpunkt des jeweiligen Bereichs die halbe Breite. Insbesondere weisen die Bereiche jeweils eine gewisse Zeitdauer Δ*t* auf, in der das Ultraschall-Empfangssignal herangezogen wird, die sich aus einer jeweiligen Startzeit *t*₁ und einer jeweiligen Endzeit *t*₂ ergibt zu Δ*t* = *t*₂*-t*₁*.* Der Mittelpunkt des jeweiligen Bereichs ergibt sich dann zu (*t*₂*-t*₁)/2*.*

Für den ersten Bereich und den zweiten Bereich werden hierbei insbesondere durch die Auswertevorrichtung jeweils ein statistisches Maß σ̅₁ und σ̅₂ ermittelt. Hierbei handelt es sich für den ersten Bereich und den zweiten Bereich um dasselbe statistische Maß. Anhand des statistischen Maßes σ̅₁ für den ersten Bereich und des statistischen Maßes σ̅₂ für den zweiten Bereich kann sodann eine Hindernisklassifikation vorgenommen werden. Handelt es sich beispielsweise bei dem zu erkennenden Hindernis um ein hohes Hindernis, so existiert, wie vorstehend beschrieben, eine zweite verzögerte und gedämpfte Reflexion an dem Hindernis. Somit weist der zweite Bereich ein niedriges statistisches Maß auf, so dass hierdurch auf ein hohes Hindernis geschlossen werden kann. Hingegen, wenn das statistische Maß des ersten Bereichs niedrig ist, so kann auf ein mittelhohes Objekt geschlossen werden und wenn das statistische Maß in beiden Bereichen hoch ist, so kann auf ein niedriges Objekt geschlossen werden, sodass dieses Hindernis insbesondere überfahrbar sein kann, ohne dass Schäden am Fahrzeug entstehen. Insbesondere weist ein Bereich ein hohes/niedriges statistisches Maß auf im Vergleich zu demselben statistischen Maß über die beiden Bereiche der Einhüllenden gemeinsam oder zu dem statistischen Maß des jeweils anderen Bereichs. Alternativ weist ein Bereich mit einem statistischen Maß kleiner 0.5 ein niedriges statistisches Maß auf und mit einem statistischen Maß größer oder gleich 0.5 ein hohes statistisches Maß.

Ferner kann es zweckmäßig sein, wenn ein erkanntes Hindernis optisch und/oder akustisch und/oder taktil (z.B. Sitz oder Lenkrad eines Fahrzeuges) signalisiert wird, wobei die Signale für vorbestimmte Hindernisklassen von Hindernissen unterschiedlich sind. Dem das Fahrzeug einparkenden Fahrer kann also auf diese Weise die Hindernisklassifikation des Hindernisses signalisiert werden.

Vorzugsweise können mehr als die zwei vorstehend genannten Bereiche definiert werden. So kann beispielsweise ein dritter Bereich definiert werden, wobei der Mittelpunkt des dritten Bereichs insbesondere mit dem lokalen Maximum bzw. Peak der Einhüllenden im Wesentlichen zusammenfallen kann. Für jeden der Bereiche wird wie oben beschrieben ein statistisches Maß für die Hüllkurve innerhalb des jeweiligen Bereichs ermittelt und bei der Hindernisklassifikation berücksichtigt.

Vorzugsweise umfasst die Hindernisklassifikation die Klassen für ein niedriges Hindernis, ein mittelhohes Hindernis und ein hohes Hindernis. Hierbei können insbesondere die Höhen der jeweiligen Hindernisse definiert sein in Abhängigkeit des Fahrzeugs. So ist beispielsweise ein niedriges Hindernis derart, dass dieses von dem Fahrzeug schadlos überfahren werden kann. Zu dieser Klasse von unterscheidbaren Hindernissen gehört beispielsweise ein Bordstein, ein Stopper oder dergleichen andere Bodenstellen. Mittelhohe Hindernisse weisen eine Höhe auf, die im Wesentlichen der Anordnungshöhe des Ultraschallempfängers insbesondere am Fahrzeug entspricht. Hierbei kann es sich beispielsweise um einen Pfosten oder Pfahl oder sonstige Parkbegrenzung handeln. Darüberhinausgehende höhere Hindernisse werden klassifiziert als hohe Hindernisse, wobei es sich bei hohen Hindernissen beispielsweise um eine Wand wie insbesondere eine Gebäudewand oder ein anderes Fahrzeug handeln kann.

Vorzugsweise handelt es sich bei dem verwendeten statistischen Maß um einen Varianzkoeffizienten oder Variationskoeffizient ("coefficient of variation") *CV,* welcher sich ergibt zu $CV = \frac{\sqrt{Varianz}}{Mittelwert} ,$ einen quadrierten Varianzkoeffizienten/Variationskoeffizient *SCV,* welcher sich ergibt zu $SCV = {CV}^{2} = \frac{Varianz}{{Mittelwert}^{2}} ,$ oder einem logarithmischen Varianzkoeffizienten/Variationskoeffizienten $ldSCV = ld \left(SCV\right) = ld \left({CV}^{2}\right) = ld \left(Varianz\right) - 2 ⋅ ld \left(Mittelwert\right) ,$ mit *ld* als Logarithmus zur Basis 2. Weitere statistische Maße können ebenfalls verwendet werden, solange diese deskriptiv sind für die Streuung der Einhüllenden.

Vorzugsweise wird bei einem statistischen Maß im ersten Bereich unterhalb eines ersten Grenzwerts auf ein mittelhohes Hindernis geschlossen. Alternativ oder zusätzlich hierzu wird bei einem statistischen Maß im zweiten Bereich unterhalb eines zweiten Grenzwerts auf ein hohes Hindernis geschlossen. Alternativ oder zusätzlich hierzu wird bei einem statistischen Maß im ersten Bereich und im zweiten Bereich über einem dritten Grenzwert auf ein niedriges Hindernis geschlossen. Hierbei können die Grenzwerte gleich oder unterschiedlich sein.

Vorzugsweise wird die Hindernisklassifikation anhand eines Konfidenzwerts angegeben. Insbesondere kann ein Schwellwert herangezogen werden, ab dem von dem Konfidenzwert auf ein bestimmtes Hindernis geschlossen wird. Liegt beispielsweise ein Hindernis vor bei einem niedrigen Konfidenzwert, so kann beispielsweise der Schwellwert gewählt werden kleiner als 0.3 und insbesondere kleiner als 0.1. Liegt somit der Konfidenzwert unterhalb dieses Schwellwerts, wird von einem entsprechenden Hindernis ausgegangen. Liegt ein Hindernis bei einem hohen Konfidenzwert vor, so kann der Schwellwert gewählt werden insbesondere größer als 0.7 und vorzugsweise größer als 0.9. Wird hierbei der Schwellwert überschritten, so wird anhand des Konfidenzwerts auf ein entsprechendes Hindernis geschlossen.

Vorzugsweise wird die Hindernisklassifikation ermittelt anhand einer Regression und insbesondere einer logistischen Regression. Hierbei werden in der logistischen Regression die jeweiligen statistischen Maße σ̅₁ und σ̅₂ für den ersten Bereich und den zweiten Bereich berücksichtigt und korreliert mit einem ersten Konfidenzwert p₁ und einem zweiten Konfidenzwert p₂. Insbesondere werden hierbei Regressionsparameter der Regression mittels eines Optimierungsalgorithmus ermittelt. Hierbei kann beispielsweise durch den ersten Konfidenzwert p₁ eine Unterscheidung zwischen einem niedrigen und einem hohen Hindernis getroffen werden und durch den zweiten Konfidenzwert p₂ eine Unterscheidung zwischen einem niedrigen und einem mittelhohen Hindernis. Ist beispielsweise der erste Konfidenzwert p₁ klein und insbesondere unterhalb eines Schwellwerts, so wird auf ein hohes Hindernis geschlossen. Überschreitet der Konfidenzwert p₁ jedoch den Schwellwert, so wird auf ein niedriges Hindernis geschlossen. Selbstverständlich kann die Definition des Konfidenzwertes genau andersrum sein, so dass bei einem hohen Konfidenzwert p₁ auf ein hohes Hindernis und bei einem niedrigen Konfidenzwert p₁ auf ein niedriges Hindernis geschlossen werden wird. Anhand des zweiten Konfidenzwertes p₂ kann auf ähnliche oder gleiche Weise eine Unterscheidung zwischen einem mittelhohen und einem niedrigen Hindernis getroffen werden.

Vorzugsweise werden bei der Regression eine Frequenz *f* des Ultraschallsignals und insbesondere die frequenzabhängige Abstrahlcharakteristik des Ultraschallsenders und/oder einen Abstand *d* zwischen dem Hindernis und dem Ultraschallempfänger berücksichtigt.

Vorzugsweise werden die Regressionsparameter der Regression anhand von klassifizierten Trainingsdaten ermittelt. Bei den klassifizierten Trainingsdaten handelt es sich insbesondere um gemessene Ultraschall-Empfangssignale und eine dazugehörige Hindernisklassifikation für die bestimmte Einbausituation des Ultraschallsenders und des Ultraschallempfängers. Hierbei können bei der Ermittlung der Regressionsparameter weitere physikalische Parameter berücksichtigt werden wie beispielsweise die Frequenz und/oder der Abstand zwischen dem Hindernis und dem Ultraschallempfänger.

Vorzugsweise werden mehrere Abstandsbereiche festgelegt, wobei für mehr als einen und insbesondere jeden der Abstandsbereiche eine eigene Regression durchgeführt wird. Es hat sich im Rahmen der Erfindung gezeigt, dass eine Korrelation zwischen dem statistischen Maß des Ultraschall-Empfangssignals und der Hindernisklassifikation abhängig sein kann von dem Abstand zwischen dem Hindernis und dem Ultraschallsender bzw. Ultraschallempfänger. So kann eine genauere Hindernisklassifikation durchgeführt werden, sofern das Umfeld des Ultraschallempfängers in Abstandsbereiche eingeteilt wird und für jeden dieser Abstandsbereiche eine eigene Regression und insbesondere eine eigene logistische Regression durchgeführt wird. So liegt sodann für jeden dieser Abstandsbereiche eine eigene Korrelation vor zwischen dem gewählten statistischen Maß der jeweiligen Bereiche, welche zu verbesserten Vorhersagen führt bei der Hindernisklassifikation. Insbesondere können zwei oder mehr, drei oder mehr, vier oder mehr Abstandsbereiche definiert werden. Insbesondere sind genau vier Abstandsbereiche definiert, wobei ein erster Abstandsbereich den Abstand kleiner 900 mm vom Ultraschallempfänger umfasst, ein zweiter Abstandsbereich einen Bereich zwischen 900 mm und 1200 mm, ein dritter Abstandsbereich einen Bereich zwischen 1200 mm und 2000 mm und ein vierter Abstandsbereich einen Bereich von mehr als 2000 mm umfasst. Somit werden entsprechend auch vier Regressionen bestimmt, welche die jeweiligen statistischen Maße des ersten Bereichs und des zweiten Bereichs mit den Konfidenzwerten p₁ und p₂ korrelieren.

Vorzugsweise werden mehrere Abstandsbereiche festgelegt, wobei für mehr als einen und insbesondere jeden der Abstandsbereiche eine Position und/oder eine Breite des ersten Bereichs festgelegt oder bestimmt wird. Alternativ oder zusätzlich hierzu wird für mehr als einen und insbesondere jeden der Abstandsbereiche eine Position und/oder eine Breite des zweiten Bereichs festgelegt oder bestimmt. Somit kann eine optimale Berücksichtigung der Hüllkurve des Ultraschall-Empfangssignal erfolgen insbesondere unter Berücksichtigung des jeweiligen Abstands.

Vorzugsweise ermittelt sich das statistische Maß für den ersten Bereich und den zweiten Bereich jeweils zu: ${\overline{σ}}_{i} = \frac{\frac{1}{{b}_{l , i} - {b}_{r , i}} {\sum }_{j = {b}_{l , i}}^{{b}_{r , i}} {\left({x}_{j}-{μ}_{i}\right)}^{2}}{{μ}_{i}^{2}}$ mit ${μ}_{i} = \frac{1}{{b}_{l , i} - {b}_{r , i}} {\sum }_{j = {b}_{l , i}}^{{b}_{r , i}} {x}_{j} und i = 1 , 2$ wobei i den ersten Bereich und den zweiten Bereich bezeichnet und *b_{l,i}* die linke Grenze des i-ten Bereichs und *b_{r,i}* die rechte Grenze des i-ten Bereichs. *xⱼ* bezeichnet den Wert der Hüllkurve. Sind mehr als zwei Bereiche vorgesehen, erfolgt die Berechnung des statistischen Maßes für diese weiteren Bereiche insbesondere analog.

Vorzugsweise ermittelt sich der Konfidenzwert p₁ zu: ${p}_{1} = max \left(sig\left({β}_{0}+{β}_{1}⋅{\overline{σ}}_{1}+{β}_{2}⋅{\overline{σ}}_{2}+{β}_{3}⋅{d}^{2}\right)-{p}_{offset},0\right)$ und der Konfidenzwert p₂ ergibt sich zu ${p}_{2} = max \left(sig\left(β{′}_{0}+β{′}_{1}⋅{\overline{σ}}_{1}+β{′}_{2}⋅{\overline{σ}}_{2}+β{′}_{3}⋅{d}^{2}\right)-p{′}_{offset},0\right) .$

**Hierbei bezeichnen** *β*₀...*β*₃ und *β*'₀...*β*'₃ die Regressionsparameter, *d* den Abstand. Alternativ zu der vorstehenden Regression kann der Abstand *d* auch linear einfließen oder nicht einfließen. Alternativ oder zusätzlich hierzu kann die Regression die Frequenz des Ultraschallsignals *f* und insbesondere die frequenzabhängige Abstrahlcharakteristik des Ultraschallsenders berücksichtigen. Bei der Funktion "sig" handelt es sich um eine Stufenfunktion, wie beispielsweise eine Sigmoidfunktion. Mittels p_{offset} und p'_{offset} erfolgt eine Verschiebung derart, dass der optimale Entscheidungsschwellwert der logistischen Regression bei 0.5 liegt, so dass die ermittelten Konfidenzwerte p₁ und p₂ miteinander vergleichbar sind und eine gleiche Indizierung liefern.

Vorzugsweise ist die Breite des ersten Bereichs und des zweiten Bereichs gleich oder verschieden. So können durch Anpassung des ersten Bereichs und des zweiten Bereichs die Ergebnisse bzw. Genauigkeit der Hindernisklassifikation verbessert werden. Hierbei können die Breite des ersten Bereichs und/oder des zweiten Bereichs vorgegeben werden oder sich dynamisch anpassen.

Vorzugsweise ist ein Abstand des Mittelpunkts des ersten Bereichs zu dem detektierten lokalen Maximum und ein Abstand des Mittelpunkts des zweiten Bereiches zu dem detektierten lokalen Maximum gleich oder verschieden. Ist der Abstand des Mittelpunkts des ersten Bereichs zu dem detektierten lokalen Maximum gleich zu dem Abstand des Mittelpunkts des zweiten Bereichs zu dem detektierten lokalen Maximum, so sind der erste Bereich und der zweite Bereich symmetrisch um den Peak bzw. das lokale Maximum angeordnet.

Weiterhin betrifft die vorliegende Erfindung ein System zur Erkennung eines Hindernisses mit Hilfe von reflektierten Ultraschallwellen, insbesondere als Einparkhilfe für ein Fahrzeug. Das System weist einen Ultraschallsender zur Aussendung eines Ultraschalsignals in einen zu überwachenden Erfassungsbereich auf. Weiterhin weist das System einen Ultraschallempfänger auf zum Empfangen eines von einem Hindernis im Erfassungsbereich reflektierten Ultraschallsignals als Ultraschallempfangssignal. Weiterhin weist das System eine Auswertevorrichtung auf, die mit zumindest dem Ultraschallempfänger verbunden ist zur Auswertung des Ultraschall-Empfangssignals. Hierbei ist insbesondere die Auswertevorrichtung ausgebildet zur Durchführung des vorstehend beschriebenen Verfahrens. Hierzu weist die Auswertevorrichtung insbesondere einen Speicher und einen Prozessor aus, wobei in dem Speicher Instruktionen gespeichert sind, die, wenn ausgeführt durch den Prozessor, die Schritte des Verfahrens durchführen.

Nachfolgend wird die Erfindung anhand einer bevorzugten Ausführungsform unter Bezugnahme auf die beigefügten Figuren näher erläutert.

Es zeigen:
- Fig. 1: ein Ablaufdiagramm des Verfahrens gemäß der vorliegenden Erfindung,
- Fign. 2A bis 2D: ein System gemäß der vorliegenden Erfindung mit unterschiedlichen Hindernissen,
- Fig. 3: eine exemplarische Hüllkurve des Ultraschall-Empfangssignals,
- Fig. 4: ein Ablaufdiagramm des Verfahrens gemäß der vorliegenden Erfindung,
- Fig. 5: Darstellung unterschiedlicher exemplarischer Abstandsbereiche gemäß der vorliegenden Erfindung und
- Fig. 6.: eine schematische Darstellung des Systems.

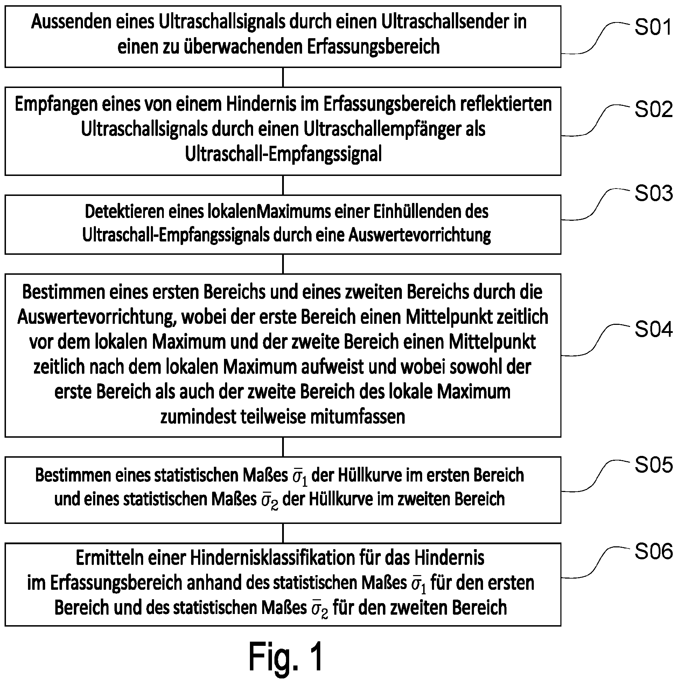

Im Folgenden wird Bezug genommen auf Fig. 1. Fig. 1 zeigt die Schritte eines Verfahrens zur Erkennung eines Hindernisses mit Hilfe von reflektierten Ultraschallwellen, insbesondere als Einparkhilfe für Fahrzeuge. Das Verfahren umfasst hierbei die folgenden Schritte:
In Schritt S01 wird ein Ultraschallsignal durch einen Ultraschallsender in einen zu überwachenden Erfassungsbereich ausgesendet.

In Schritt S02 wird ein von einem Hindernis im Erfassungsbereich reflektierten Ultraschallsignals durch einen Ultraschallempfänger als Ultraschall-Empfangssignal empfangen.

In Schritt S03 wird ein lokales Maximum einer Einhüllenden des Ultraschall-Empfangssignals detektiert durch eine Auswertevorrichtung.

In Schritt S04 wird ein erster Bereich und ein zweiter Bereich durch die Auswertevorrichtung bestimmt, wobei der erste Bereich einen Mittelpunkt zeitlich vor dem detektierten lokalen Maximum und der zweite Bereich einen Mittelpunkt zeitlich nach dem detektierten lokalen Maximum aufweist und wobei sowohl der erste Bereich als auch der zweite Bereich das detektierte lokale Maximum zumindest teilweise mitumfassen.

In Schritt S05 wird ein statistisches Maß σ̅₁ der Hüllkurve im ersten Bereich und ein statistisches Maß σ̅₂ der Hüllkurve im zweiten Bereich bestimmt.

In Schritt S06 wird eine Hindernisklassifikation ermittelt für das Hindernis im Erfassungsbereich anhand des statistischen Maßes *σ̅*₁ für den ersten Bereich und des statistischen Maßes *σ̅*₂ für den zweiten Bereich.

Somit wird im vorliegenden Verfahren das Ultraschallempfangssignal, welches von einem Ultraschallempfänger empfangen wird, eine Höhenklassifikation mit Einordnung von Hindernissen in überfahrbare und nicht überfahrbare Hindernisse auf Grundlage der durch einen einzelnen Ultraschallsensor während eines einzelnen Messzyklus erfassten Ultraschall-Empfangssignal vorgenommen. Hierbei werden durch das Verfahren verschiedene physikalische Effekte quantifiziert, um aus deren Kombination eine Hindernisklassifikation abzuleiten. Hierzu werden erfindungsgemäß zwei Bereiche in der Zeitdomäne des Ultraschall-Empfangssignals analysiert. Der erste Bereich weist dabei einen Mittelpunkt auf, welcher zeitlich vor dem lokalen Maximum bzw. dem Peak der Einhüllenden des Ultraschall-Empfangssignals liegt. Der zweite Bereich weist einen Mittelpunkt auf, der zeitlich nach dem lokalen Maximum bzw. dem Peak der Einhüllenden des Ultraschall-Empfangssignals liegt. Beide Bereiche umfassen dabei zumindest teilweise auch das detektierte lokale Maximum der Einhüllenden des Ultraschall-Empfangssignals selbst und überlappen dabei. Für den ersten Bereich und den zweiten Bereich werden hierbei insbesondere durch die Auswertevorrichtung jeweils dasselbe statistische Maß σ̅₁ und σ̅₂ ermittelt. Anhand des statistischen Maßes σ̅₁ für den ersten Bereich und des statistischen Maßes σ̅₂ für den zweiten Bereich kann sodann eine Hindernisklassifikation vorgenommen werden. Handelt es sich beispielsweise bei dem zu erkennenden Hindernis um ein hohes Hindernis, so existiert, wie vorstehend beschrieben, eine zweite verzögerte und gedämpfte Reflexion an dem Hindernis. Somit weist der zweite Bereich ein niedriges statistisches auf, so dass hierdurch auf ein hohes Hindernis geschlossen werden kann. Hingegen, wenn das statistische Maß des ersten Bereichs niedrig ist, so kann auf ein mittelhohes Objekt geschlossen werden und wenn das statistische Maß in beiden Bereichen hoch ist, so kann auf ein niedriges Objekt geschlossen werden, sodass dieses Hindernis insbesondere überfahrbar sein kann, ohne dass Schäden am Fahrzeug entstehen.

Dabei kann es sich bei dem verwendeten statistischen Maß um einen Varianzkoeffizienten *CV* handeln, welcher sich ergibt zu $CV = \frac{\sqrt{Varianz}}{Mittelwert}$*,* einen quadrierten Varianzkoeffizienten *SCV* handeln, welcher sich ergibt zu *SCV =* ${CV}^{2} = \frac{Varianz}{{Mittelwert}^{2}}$, oder einem logarithmischen Varianzkoeffizienten *ldSCV = ld(SCV) = ld*(*CV*²) = *ld*(Varianz)- 2 · *ld*(Mittelwert) handeln, mit *ld* als Logarithmus zur Basis 2. Weitere statistische Maße können ebenfalls verwendet werden, solange diese deskriptiv sind für die Streuung der Einhüllenden.

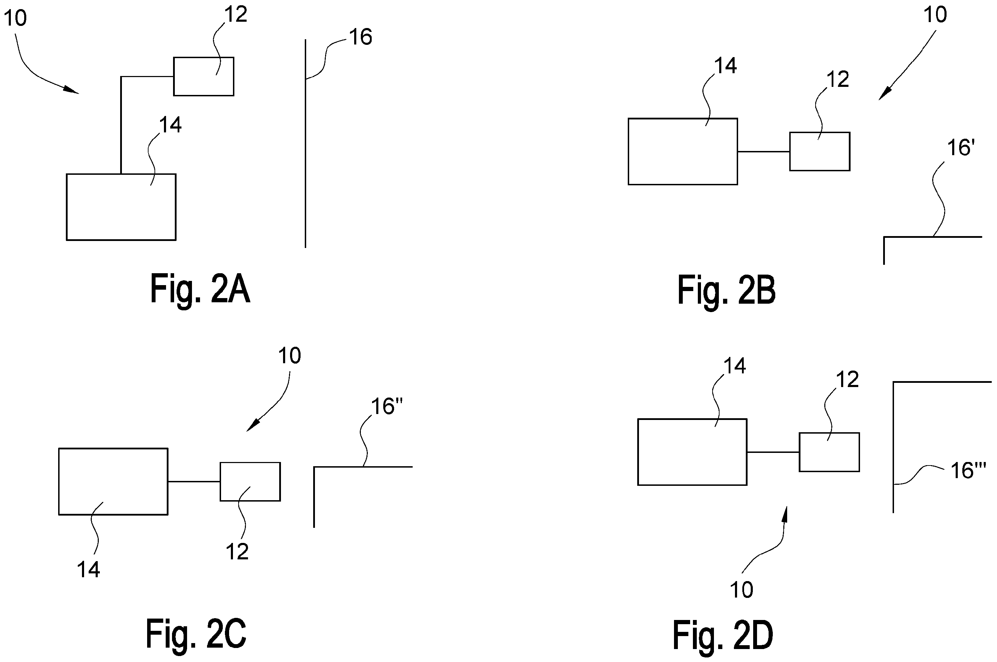

Im Nachfolgenden wird Bezug genommen auf die Fign. 2A bis 2D. Fig. 2A zeigt schematisch ein System 10 gemäß der vorliegenden Erfindung von oben mit einem Ultraschalltransducer 12 zum Aussenden eines Ultraschallsignals, wobei das Ultraschallsignal an einem Hindernis 16 reflektiert wird und von dem Ultraschalltransducer 12 empfangen wird. Mit dem Ultraschalltransducer 12 ist eine Auswertevorrichtung 14 verbunden. Die Fign. 2B bis 2D zeigen hierbei das System 10 schematisch in einer Seitenansicht. Dabei ist in der Fig. 2B ein niedriges Hindernis 16' dargestellt. Hierbei handelt es sich bei einem niedrigen Hindernis 16' um ein Hindernis, welches von dem Fahrzeug schadlos überfahren werden kann. Dies kann beispielsweise eine Bordsteinkante, eine Bodenschwelle oder dergleichen sein. In Fig. 2C handelt sich um ein mittelhohes Hindernis 16", wobei die Oberkante des Hindernisses 16" im Wesentlichen mit der Einbauhöhe des Ultraschalltransducers 12 korrespondiert. In Fig. 2D ist ein hohes Hindernis 16‴ dargestellt, welches über die Einbauhöhe des Ultraschalltransducers 12 hinausgeht.

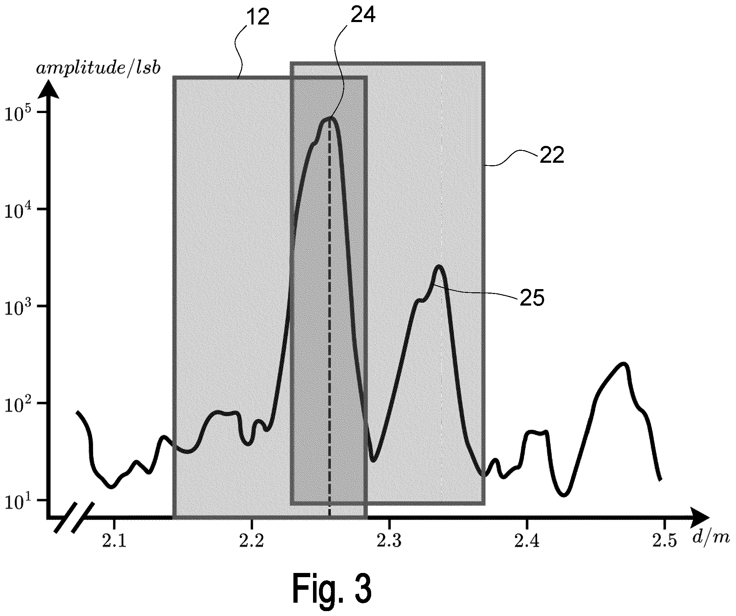

Nachfolgend wird Bezug genommen auf die Fig. 3, welche exemplarisch eine Einhüllende 18 des Ultraschall-Empfangssignals darstellt. Hierbei zeigt Figur 3 lediglich einen Ausschnitt. Hierbei ist in der Fig. 3 die Amplitude des Ultraschall-Empfangssignals abgetragen über den Abstand d. Hierbei korreliert der Abstand d mit der Zeit aufgrund der Ausbreitung des Ultraschallsignals mit Schallgeschwindigkeit. Wie aus der Fig. 3 ersichtlich, weist die Einhüllende 18 ein lokales Maximum 24 bzw. einen Peak auf. Insbesondere kann es sich bei dem lokalen Maximum um ein globales Maximum handeln. Gemäß dem vorliegenden Verfahren wird ein erster Bereich 20 definiert, wobei der Mittelpunkt dieses ersten Bereiches 20 zeitlich vor dem lokalen Maximum 24 liegt. Weiterhin wird ein zweiter Bereich 22 definiert, dessen Mittelpunkt zeitlich nach dem lokalen Maximum 24 liegt. Der erste Bereich 20 und der zweite Bereich 22 überlappen hierbei und umfassen beide zumindest teilweise das detektierte lokale Maximum 24. Für die Einhüllende 18 in dem ersten Bereich 20 wird sodann gemäß dem Verfahren der vorliegenden Erfindung ein statistisches Maß *σ̅*₁ und insbesondere ein Varianzkoeffizient bestimmt. Ebenso wird für die Einhüllende 18 in dem zweiten Bereich 22 das statistische Maß *σ̅*₂ und insbesondere ebenfalls der Varianzkoeffizient des zweiten Bereichs 22 ermittelt. Auf Grundlage der ermittelten statistischen Maße des ersten Bereichs 20 und des zweiten Bereichs 22 kann eine Hindernisklassifikation durchgeführt werden. In dem Beispiel der Fig. 3 weist die Einhüllende 18 eine nachlaufende gedämpfte Reflexion 25 auf, welche von dem zweiten Bereich 22 umfasst wird. Hierdurch sinkt der Varianzkoeffizient *σ̅*₂ des zweiten Bereich 22, so dass aufgrund des verringerten Varianzkoeffizienten *σ̅*₂ des zweiten Bereichs 22 auf ein hohes Hindernis geschlossen werden kann.

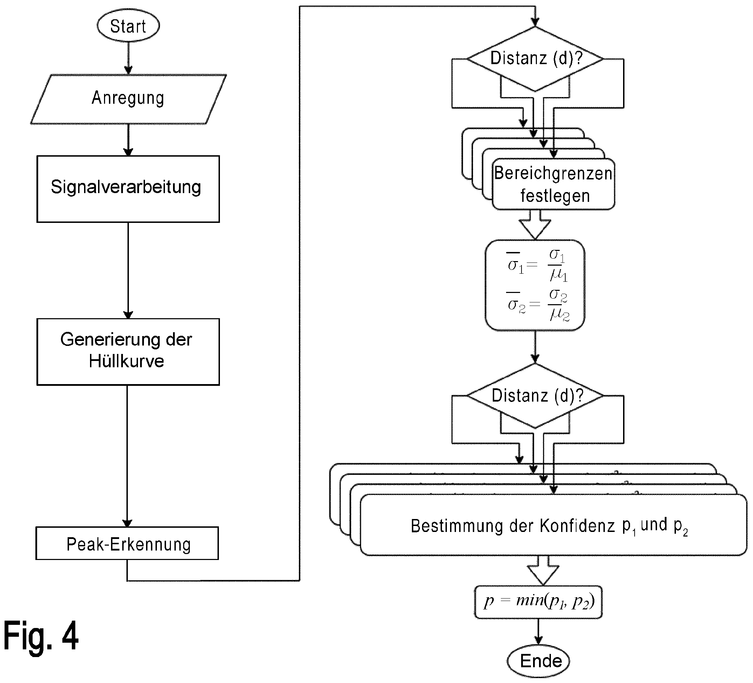

Nachfolgend wird Bezug genommen auf die Fig. 4. Zunächst erfolgt eine Anregung mit einem Ultraschallsignal. Insbesondere handelt es sich um einen Ultraschallburst mit einer Vielzahl von Pulsen. Beispielsweise können mehr als 80 Pulse und insbesondere mehr als 90 Pulse verwendet werden in einer einzelnen Anregung. Weiterhin kann der Ultraschallburst eine sich verändernde Frequenz von Puls zu Puls aufweisen und insbesondere einen Chirp. Nachfolgend erfolgt eine Signalverarbeitung. Diese kann beispielsweise eine Verschiebung ins Basisband umfassen, eine Filterung oder dergleichen.

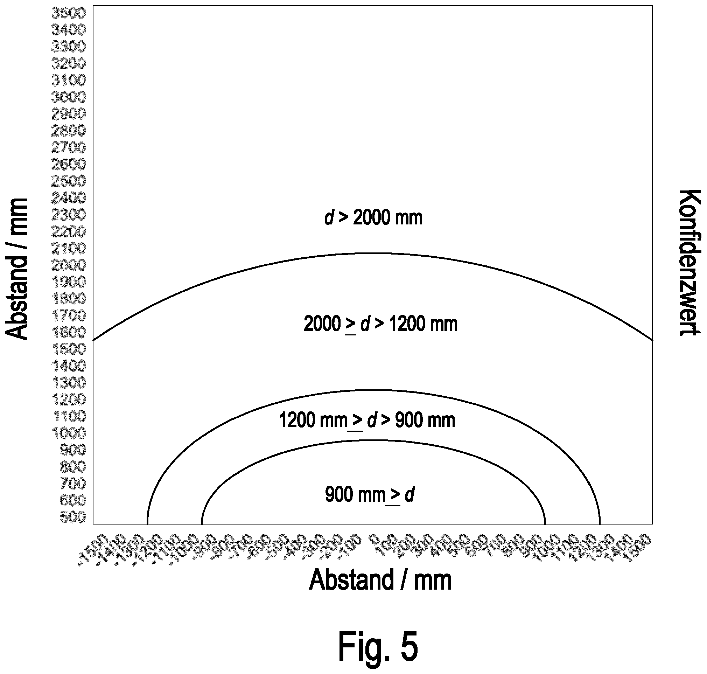

Nachfolgend wird eine Hüllkurve bzw. Einhüllende 18 generiert, welche exemplarisch in der Fig. 3 bereits gezeigt wird. Sodann erfolgt eine Peak-Erkennung zur Ermittlung des lokalen Maximus 24. Auf Grundlage des Zeitpunkts des Peaks bzw. des lokalen Maximums 24 der Einhüllenden 18 kann auf einen Abstand d des Hindernisses zum Ultraschallempfänger geschlossen werden. In Abhängigkeit von der Distanz d können sodann die Bereichsgrenzen bzw. Bereiche 20, 22 festgelegt werden. Hierzu können Abstandsbereiche definiert werden. Diese sind in Fig. 5 dargestellt. In dem Bespiel der Fig. 5 sind vier Abstandsbereiche definiert für d ≤ 900 mm, für 900 mm< d ≤ 1.200 mm, für 1.200 mm < d ≤ 2.000 mm und für d > 2.000 mm. Für jeden dieser Abstandsbereiche können die jeweiligen ersten Bereiche 20 und zweiten Bereiche 22 gezeigt in der Fig. 3 entsprechend angepasst werden. Hierbei kann sowohl der Abstand des Mittelpunkts zum detektierten lokalen Maximum 24 als auch die Breite der jeweiligen Bereiche 20, 22 für die entsprechenden Abstandsbereiche angepasst werden. Insbesondere können mehr als vier Abstandsbereiche oder weniger als vier Abstandsbereiche definiert werden. Auch die Grenzen der Abstandsbereiche sind in der Fig. 5 lediglich exemplarisch angegeben, so dass die vorliegende Erfindung nicht auf die dargestellten Werte beschränkt ist. Alternativ hierzu ist es möglich für alle Abstandsbereiche dieselben Parameter für den ersten Bereich 22 und den zweiten Bereich 22 zu wählen, so dass für alle Abstandsbereiche Position und Breite des ersten Bereichs 20 und des zweiten Bereichs 22 identisch ist.

Nachfolgend wird für den ersten Bereich und den zweiten Bereich das gewählte statistische Maß *σ̅*₁ und *σ̅*₂ bestimmt. Hierbei handelt es sich für den ersten Bereich und den zweiten Bereich um dasselbe statistische Maß. Das statistische Maß für den ersten Bereich 20 und den zweiten Bereich 22 ergibt sich insbesondere jeweils zu: ${\overline{σ}}_{i} = \frac{\frac{1}{{b}_{l , i} - {b}_{r , i}} {\sum }_{j = {b}_{l , i}}^{{b}_{r , i}} {\left({x}_{j}-{μ}_{i}\right)}^{2}}{{μ}_{i}^{2}}$ mit ${μ}_{i} = \frac{1}{{b}_{l , i} - {b}_{r , i}} {\sum }_{j = {b}_{l , i}}^{{b}_{r , i}} {x}_{j}$ und i=1,2 wobei i den ersten Bereich und den zweiten Bereich bezeichnet und *b_{l,i}* die linke Grenze des i-ten Bereichs und *b_{r,i}* die rechte Grenze des i-ten Bereichs. *xⱼ* bezeichnet den Wert der Hüllkurve bzw. die Einhüllende 18.

Nachfolgend werden die Konfidenzwerte p₁ und p₂ bestimmt. Hierbei kann jeweils für die Abstandsbereiche eine unterschiedliche Bestimmung der Konfidenzwerte p₁ und p₂ erfolgen. Insbesondere erfolgt die Bestimmung der Konfidenzwerte p₁ und p₂ mittels einer logistischen Regression. Hierbei kann für jeden der Abstandsbereiche eine separate Regression ermittelt werden, wodurch die Hindernisklassifikation eine erhöhte Genauigkeit erfährt. Die Konfidenzwerte p₁ und p₂ ergeben sich hierbei beispielsweise durch ${p}_{1} = max \left(sig\left({β}_{0}+{β}_{1}⋅{\overline{σ}}_{1}+{β}_{2}⋅{\overline{σ}}_{2}+{β}_{3}⋅{d}^{2}\right)-{p}_{offset},0\right)$ und ${p}_{2} = max \left(sig\left(β{′}_{0}+β{′}_{1}⋅{\overline{σ}}_{1}+β{′}_{2}⋅{\overline{σ}}_{2}+β{′}_{3}⋅{d}^{2}\right)-p{′}_{offset},0\right) .$

**Hierbei bezeichnen** *β*₀...*β*₃ und *β*'₀...*β*'₃ die Regressionsparameter, *d* den Abstand. Alternativ zu der vorstehenden Regression kann der Abstand *d* auch linear einfließen oder nicht einfließen. Alternativ oder zusätzlich hierzu kann die Regression die Frequenz des Ultraschallsignals *f* berücksichtigen. Bei der Funktion "sig" handelt es sich um eine Stufenfunktion, wie beispielsweise eine Sigmoidfunktion. Mittels p_{offset} und p'_{offset} erfolgt eine Verschiebung derart, dass der optimale Entscheidungsschwellwert der logistischen Regression bei 0.5 liegt, so dass die ermittelten Konfidenzwerte p₁ und p₂ miteinander vergleichbar sind und eine gleiche Indizierung liefern.

Anhand des Konfidenzwerts p₁ wird zwischen hohen Hindernissen und niedrigen Hindernissen unterschieden. So kann beispielsweise p₁ klein werden, sofern ein hohes Hindernis vorliegt und groß, sofern ein niedriges Hindernis vorliegt oder andersherum. Mittels des Konfidenzwerts p₂ wird unterschieden zwischen mittelhohen und niedrigen Hindernissen. So kann ein mittelhohes Hindernis vorliegen, sofern p₂ klein wird und ein niedriges Hindernis vorliegen, sofern p₂ groß wird oder andersherum.

Die Regressionsparameter *β*₀...*β*₃ und *β*'₀...*β*'₃ für die jeweiligen Abstandsbereiche werden hierbei bestimmt insbesondere anhand klassifizierter Trainingsdaten, welche Ultraschall-Empfangssignale für klassifizierte Hindernisse in einem vorgegebenen Abstand d aufweisen

In einem letzten Schritt gemäß dem Verfahren der Fig. 4 wird ein Konfidenzlevel p ermittelt anhand des Minimums der Konfidenzwerte p₁ und p₂, so dass bei einem kleinen Konfidenzlevel p auf ein Hindernis geschlossen werden kann. Sofern ein hohes Hindernis vorliegt bei einem hohen Konfidenzwert p₁ und ein mittelhohes Hindernis vorliegt bei einem hohen Konfidenzwert p₂, würde in diesem letzten Schritt die Maximumfunktion statt der Minimumfunktion verwendet werden. Insbesondere kann dabei der Konfidenzlevel p ortsaufgelöst ermittelt werden anhand der durchgeführten logistischen Regression. Dabei kann für eine Vielzahl unterschiedlicher Positionen im Erfassungsbereich der Konfidenzlevel p ermittelt werden. Somit kann neben der Hindernisklassifikation anhand des ortsaufgelösten Konfidenzlevels ebenfalls ein Abstand zum Hindernis sowie eine Richtung ermittelt werden.

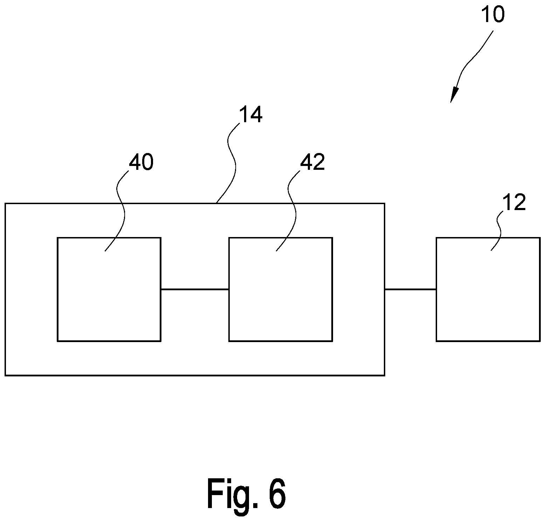

Nachfolgend wird Bezug genommen die Fig. 6. Die Fig. 6 zeigt ein System gemäß der vorliegenden Erfindung mit einem Ultraschalltransducer 12, durch den ein Ultraschallsignal ausgesendet wird in einen zu überwachenden Erfassungsbereich und ein von dem Hindernis im Erfassungsbereich reflektiertes Ultraschallsignal empfangen wird. Dabei weist das System eine Auswertevorrichtung 14 auf. Die Auswertevorrichtung 14 weist einen Prozessor 40 und eine Speichereinheit 42 auf, wobei durch die Speichereinheit Instruktionen gespeichert werden, die wenn vom Prozessor ausgeführt, die Schritte des vorstehend beschriebenen Verfahrens durchführen.

Im Rahmen der vorliegenden Erfindung wurde somit erkannt, dass anhand der Varianzkoeffizienten der Einhüllenden 18 in den Bereichen um das lokale Maximum 24 herum eine Hindernisklassifikation der drei zuvor beschriebenen Hindernisklassen oder mehr als dieser Klassen zuverlässig und mit hoher Genauigkeit möglich ist. Weiterhin kann anhand einer logistischen Regression die Wahrscheinlichkeit bzw. der Konfidenzwert angegeben werden, mit der ein aktuell vermessenes Hindernis einer dieser drei Hindernisklassen zugeordnet werden kann. Somit kann auf zuverlässige Weise eine Hindernisklassifikation durchgeführt werden.

### BEZUGSZEICHENLISTE

- 10: System
- 12: Ultraschalltransducer
- 14: Auswertevorrichtung
- 16: Hindernis
- 16': niedriges Hindernis
- 16": mittelhohes Hindernis
- 16‴: hohes Hindernis
- 18: Einhüllende
- 20: erster Bereich
- 22: zweiter Bereich
- 24: lokales Maximum
- 40: Prozessor
- 42: Speichereinheit

## Patentansprüche

1. Verfahren zur Erkennung eines Hindernisses mit Hilfe von reflektierten Ultraschallwellen, insbesondere als Einparkhilfe für ein Fahrzeug, mit den Schritten:
- Aussenden eines Ultraschallsignals durch einen Ultraschallsender in einen zu überwachenden Erfassungsbereich,
- Empfangen eines von einem Hindernis im Erfassungsbereich reflektierten Ultraschallsignals durch einen Ultraschallempfänger als Ultraschall-Empfangssignal,
- Detektieren eines lokalen Maximums einer Einhüllenden des Ultraschall-Empfangssignals durch eine Auswertevorrichtung,
- Bestimmen eines ersten Bereichs und eines zweiten Bereichs durch die Auswertevorrichtung, wobei der erste Bereich einen Mittelpunkt zeitlich vor dem lokalen Maximum und der zweite Bereich einen Mittelpunkt zeitlich nach dem lokalen Maximum aufweist und wobei sowohl der erste Bereich als auch der zweite Bereich das lokale Maximum zumindest teilweise mitumfassen,
- Bestimmen eines statistischen Maßes σ̅₁ der Hüllkurve im ersten Bereich und eines statistischen Maßes σ̅₂ der Hüllkurve im zweiten Bereich, und
- Ermitteln einer Hindernisklassifikation für das Hindernis im Erfassungsbereich anhand des statistischen Maßes σ̅₁ für den ersten Bereich und des statistischen Maßes σ̅₂ für den zweiten Bereich.

2. Verfahren nach Anspruch 1, wobei die Hindernisklassifikation die Klassen niedriges Hindernis, mittelhohes Hindernis und hohes Hindernis, wobei insbesondere ein niedriges Hindernis von dem Fahrzeug überfahrbar ist, die Höhe des mittelhohen Hindernisses der Anordnungshöhe des Ultraschallempfängers entspricht und die Höhe des hohen Hindernisses größer ist als die Anordnungshöhe des Ultraschallempfängers.

3. Verfahren nach Anspruch 1 oder 2, wobei bei einem niedrigen statistischen Maß im ersten Bereich auf ein mittelhohes Hindernis geschlossen wird und/oder
bei einem niedrigen statistischen Maß im zweiten Bereich auf ein hohes Hindernis geschlossen wird und/oder
bei einem hohen statistischen Maß im ersten Bereich und im zweiten Bereich über einem dritten Grenzwert auf ein niedriges Hindernis geschlossen wird.

4. Verfahren nach einem der Ansprüche 1 bis 3, wobei die Hindernisklassifikation anhand eines Konfidenzwerts angegeben wird.

5. Verfahren nach einem der Ansprüche 1 bis 4, wobei die Hindernisklassifikation ermittelt wird anhand einer Regression und insbesondere einer logistischen Regression.

6. Verfahren nach Anspruch 5, wobei Regressionsparameter der Regression mittels eines Optimierungsalgorithmus ermittelt werden.

7. Verfahren nach Anspruch 5 oder 6, wobei Regressionsparameter der Regression anhand von klassifizierten Trainingsdaten ermittelt werden.

8. Verfahren nach einem der Ansprüche 5 bis 7, wobei die Regression eine Frequenz des Ultraschallsignals, insbesondere die Frequenzabhängigkeit des Abstrahlwinkels des Ultraschallsenders und/oder einen Abstand zwischen dem Hindernis und dem Ultraschallempfänger berücksichtigt.

9. Verfahren nach einem der Ansprüche 5 bis 8, wobei mehrere Abstandsbereiche festgelegt werden und für mehr als einen und insbesondere jeden der Abstandsbereiche eine eigene Regression durchgeführt wird.

10. Verfahren nach einem der Ansprüche 5 bis 9, wobei mehrere Abstandsbereiche festgelegt werden und für mehr als einen und insbesondere jeden der Abstandsbereiche eine Position und/oder eine Breite des ersten Bereichs und/oder des zweiten Bereichs gewählt wird.

11. Verfahren nach einem der Ansprüche 1 bis 10, wobei eine Breite des ersten Bereichs und des zweiten Bereichs gleich oder verschieden sind.

12. Verfahren nach einem der Ansprüche 1 bis 11, wobei ein Abstand des Mittelpunkts des ersten Bereichs zu dem lokalen Maximum und ein Abstand des Mittelpunkts des zweiten Bereichs zu dem lokalen gleich oder verschieden sind.

13. System mit einem Ultraschallsender zum Aussenden eines Ultraschallsignals in einen zu überwachenden Erfassungsbereich, einen Ultraschallempfänger zum Empfangen eines von einem Hindernis im Erfassungsbereich reflektierten Ultraschallsignals und einer mit dem Ultraschallempfänger verbundenen Auswertevorrichtung, wobei das System ausgebildet ist zur Durchführung des Verfahrens nach einem der Ansprüche 1 bis 12.
